# EUROPÄISCHE PATENTSCHRIFT

(11) **EP 3 501 701 B1**
(45) Veröffentlichungstag und Bekanntmachung des Hinweises auf die Patenterteilung: **29.07.2020**
(21) Anmeldenummer: 17002075.4
(22) Anmeldetag: 22.12.2017
(51) Int. Cl.: B23B 27/16, B23B 1/00, B23B 29/04

(54) **WERKZEUGSYSTEM UND VERFAHREN ZUR DREHBEARBEITUNG**
TOOL SYSTEM AND METHOD FOR TURNING
SYSTÈME D'OUTILLAGE ET PROCÉDÉ D'USINAGE PAR TOURNAGE

(43) Veröffentlichungstag der Anmeldung: 26.06.2019
(73) Patentinhaber: Ceratizit Austria Gesellschaft m.b.H., 6600 Reutte (AT)
(72) Erfinder: Maier, Hans, A-6600 Pflach (AT); Kerle, Siegfried Ferdinand, A-6671 Rieden (AT); Hofegger, Alfred, A-6600 Reutte (AT); Urschitz, Harald, A-6600 Reutte (AT); Schurda, Einar, A-6632 Ehrwald (AT)
(74) Vertreter: Ciesla, Dirk

(56) Entgegenhaltungen:
- EP-A1- 1 415 742
- EP-B1- 1 260 294
- WO-A1-2004/022270
- US-A1- 2011 142 562

## Beschreibung

Die vorliegende Erfindung betrifft ein Werkzeugsystem für die zerspanende Drehbearbeitung und ein Verfahren zur Drehbearbeitung eines Werkstücks. Bei der zerspanenden Bearbeitung durch Drehen, insbesondere von metallischen Werkstoffen, kommen in vielen Fällen Werkzeuge zum Einsatz, bei denen auf einem Werkzeugkörper, der z.B. üblicherweise aus Stahl gebildet ist, ein auswechselbarer Schneideinsatz angeordnet ist, an dem die mit dem zu zerspanenden Material in Eingriff tretenden Schneidkantenabschnitte ausgebildet sind. Der zum Einsatz kommende Schneideinsatz ist dabei üblicherweise aus einem deutlich härteren und verschleißbeständigeren Material, wie z.B. Hartmetall (cemented carbide), Cermet oder einer Schneidkeramik, gebildet. Der Schneideinsatz kann dabei z.B. eine für die Zerspanung nutzbare Schneidecke mit daran anschließenden Schneidkantenabschnitten oder eine Mehrzahl von nutzbaren Schneidecken aufweisen.

Typischerweise kommen bei der Drehbearbeitung dabei Werkzeugsysteme, insbesondere sogenannte Monoblock-Halter, zum Einsatz, bei denen sich eine als Spanfläche ausgebildete Oberseite des auswechselbaren Schneideinsatzes in einer Ebene erstreckt, die zumindest im Wesentlichen parallel zu einer Längsachse des den Schneideinsatz tragenden Werkzeugkörpers verläuft, sodass auch die Werkzeugbezugsebene gemäß DIN 6581 zumindest im Wesentlichen parallel zu der Längsachse des Werkzeugkörpers ausgerichtet ist.

**Im Gegensatz dazu ist in der** WO2004/022270 A1 ein Werkzeugsystem beschrieben, bei dem sich die als Spanfläche ausgebildete Oberseite eines Schneideinsatzes senkrecht zu der Längsachse eines Werkzeugkörpers erstreckt. Die WO2004/022270 A1 offenbart sowohl ein Werkzeugsystem mit den Merkmalen des Oberbegriffs des unabhängigen Anspruchs 1 als auch ein Verfahren mit den Merkmalen des Oberbegriffs des unabhängigen Anspruchs 9 .

Ferner ist in der EP 1 260 294 B1 ein Werkzeugsystem für die Drehbearbeitung beschrieben, bei dem eine Mehrzahl von auswechselbaren Schneideinsätzen derart an einem als Werkzeugkopf ausgebildeten Werkzeugkörper angeordnet ist, dass sich die jeweiligen als Spanflächen ausgebildeten Oberseiten der Schneideinsätze jeweils im Wesentlichen senkrecht zu einer als Drehachse D ausgebildeten Längsachse des Werkzeugkopfes erstrecken, sodass auch die zugeordneten Werkzeugbezugsebenen Pr der Schneideinsätze senkrecht zu der Längsachse verlaufen. Obwohl das in der EP 1 260 294 B1 beschriebene Werkzeugsystem eine besonders große Vielfalt an Bearbeitungsmöglichkeiten bereitstellt, hat sich der relativ hohe Platzbedarf des Werkzeugsystems in manchen Anwendungsfällen als nicht optimal herausgestellt.

Es ist Aufgabe der vorliegenden Erfindung, ein verbessertes Werkzeugsystem für die zerspanende Drehbearbeitung und ein verbessertes Verfahren zur Drehbearbeitung eines Werkstücks bereitzustellen, die bei geringem Platzbedarf in einer Bearbeitungsmaschine eine große Vielfalt an verschiedenen Bearbeitungsoperationen ermöglichen.

Die Aufgabe wird durch ein Werkzeugsystem für die zerspanende Drehbearbeitung nach Anspruch 1 gelöst. Vorteilhafte Weiterbildungen sind in den abhängigen Ansprüchen angegeben.

Das Werkzeugsystem hat einen Werkzeugkörper, der sich entlang einer Längsachse erstreckt und ein erstes Ende zur Verbindung mit einer Bearbeitungsmaschine und ein zweites Ende mit einer Stirnseite, an der ein Sitz für einen auswechselbaren Schneideinsatz ausgebildet ist, aufweist, und einen rotationsfest an dem Sitz befestigten auswechselbaren Schneideinsatz. Der Schneideinsatz weist eine als Anlagefläche ausgebildete Unterseite, eine als Spanfläche ausgebildete Oberseite und eine als Freifläche ausgebildete umlaufende Seitenfläche auf. An einem Übergang von der Oberseite zu der umlaufenden Seitenfläche ist eine Schneidkante ausgebildet. Der Schneideinsatz ist derart an dem Sitz angeordnet, dass sich die Oberseite senkrecht zu der Längsachse des Werkzeugkörpers erstreckt und die Schneidkante mit zumindest zwei nutzbaren Schneidecken und beidseitig daran anschließenden Schneidkantenabschnitten in radialer Richtung bezüglich der Längsachse über den Außenumfang der Stirnseite des Werkzeugkörpers hervorsteht. Die zumindest zwei nutzbaren Schneidecken weisen zumindest eine erste Schneidecke und eine von der ersten Schneidecke verschiedene zweite Schneidecke auf. Durch die Ausrichtung der Oberseite des Schneideinsatzes senkrecht zur Längsachse des Werkzeugkörpers und die zumindest zwei verschiedenen in radialer Richtung hervorstehenden nutzbaren Schneidecken können durch eine Drehung des Werkzeugkörpers um seine Längsachse in einfacher und besonders kompakter Weise verschiedene Drehbearbeitungen realisiert werden, ohne dass ein anderer Schneideinsatz in eine Bearbeitungsposition gebracht werden müsste. Da die verschiedenen Schneidecken an demselben Schneideinsatz ausgebildet sind, ist das Werkzeugsystem im Vergleich zu bekannten Werkzeugsystemen auch besonders kompakt und benötigt nur sehr geringen Bauraum in der Maschine. Aufgrund der rotationsfesten Befestigung des Schneideinsatzes an dem Werkzeugkörper kann auch der Anstellwinkel, unter dem die im Eingriff befindlichen Schneidkantenabschnitte relativ zum Werkstück ausgerichtet sind in einfacher Weise zuverlässig verändert werden, sodass zwischen Ausrichtungen für verschiedene Bearbeitungsoperationen gewechselt werden kann. Die zweite Schneidecke kann sich dabei in vielfältiger Weise von der ersten Schneidecke unterscheiden. Dabei kann sie sich zum Beispiel nur in einem speziellen Merkmal, wie z.B. dem Eckenwinkel, einem Eckenradius, etc., von der ersten Schneidecke unterscheiden oder aber auch in einer Mehrzahl von Merkmalen, wie z.B. einem Eckenradius und dem Winkel und/oder der Breite einer entlang der Schneidecke verlaufenden Verstärkungsfase, einer unterschiedlichen Spanleitstufe, etc. Durch eine entsprechende Auslegung der Schneidecken können mit nur einem Werkzeugkörper und einem darauf befestigten Schneideinsatz z.B. sowohl Längsdreh-, Kopierdreh- als auch Plandreh-Operationen in beliebiger Richtung durchgeführt werden.

Gemäß einer Weiterbildung unterscheiden sich die erste Schneidecke und die zweite Schneidecke in einem oder mehreren der folgenden Merkmale voneinander: einem Eckenwinkel, einer Eckenausführung, einem Freiwinkel, einem Winkel und/oder einer Breite einer entlang der Schneidecke verlaufenden Verstärkungsfase, einer auf der Spanfläche ausgebildeten Spanleitstufenstruktur, einem Material und/oder einer darauf aufgebrachten Hartstoffbeschichtung des Schneideinsatzes im Bereich der Schneidecken, einer Bearbeitungsoperation, zu der die Schneidecke ausgebildet ist. In dieser Weise können durch eine gezielte Drehung des Werkzeugkörpers um dessen Längsachse um einen vorgegebenen Winkel gezielt die Zerspanungsbedingungen verändert werden, z.B. zwischen einer Schruppbearbeitung und einer Schlichtbearbeitung, zwischen einem Längsdrehen mit hohen Verschüben und einer Feinbearbeitung einer bestimmten Werkstückkontur, etc. Es ist unmittelbar ersichtlich, dass eine Vielzahl von Kombinationsmöglichkeiten existiert. Bei einer unterschiedlichen Eckenausführung kann z.B. der Eckenradius unterschiedlich sein, sodass z.B. Stufen mit unterschiedlichen Übergangsradien an dem zu bearbeitenden Werkstück erzeugt werden können. Unterschiede in der Spanleitstufenstruktur können z.B. für eine zerspanende Bearbeitung mit unterschiedlichen Schnitttiefen oder verschiedenen Vorschüben zum Einsatz kommen. Verschiedene Materialien des Schneideinsatzes an den verschiedenen Ecken oder unterschiedliche Beschichtungen an den verschiedenen Ecken können z.B. für verschiedene Arten der Bearbeitung oder z.B. unter anderem auch für Bereiche mit verschiedenen Materialien an dem Werkstück zum Einsatz kommen. Bei einer Ausbildung für verschiedene Bearbeitungsoperationen kann z.B. eine Schneidecke zum Drehen ausgebildet sein und eine andere zum Einstechen oder zum Gewindedrehen. Ferner ist es z.B. auch möglich, eine oder mehrere Schneidecken für eine Außenbearbeitung auszubilden und eine oder mehrere andere Schneidecken für eine Innenbearbeitung auszubilden. Es ist unmittelbar ersichtlich, dass eine große Anzahl an Kombinationsmöglichkeiten existiert.

Gemäß einer Weiterbildung weist die Unterseite des Schneideinsatzes zumindest ein Verdrehsicherungselement auf, das formschlüssig mit einem komplementären Verdrehsicherungselement an der Stirnseite des Werkzeugkörpers zusammenwirkt. In diesem Fall ist eine zuverlässige, verdrehfeste Befestigung des Schneideinsatzes an dem Werkzeugkörper gegeben, die eine gezielte Veränderung der Zerspanungsbedingungen ermöglicht, und die umlaufende Freifläche kann über den gesamten Umfang des Schneideinsatzes frei von Befestigungsstrukturen für eine verdrehfeste Befestigung gehalten werden. Folglich ist es in diesem Fall ermöglicht, bei zuverlässiger verdrehfester Befestigung des Schneideinsatzes den gesamten Umfang des Schneideinsatzes für die Zerspanung zu nutzen. Das Verdrehsicherungselement an dem Schneideinsatz kann z.B. als eine von der Unterseite des Schneideinsatzes vorspringende Struktur ausgebildet sein und das komplementäre Verdrehsicherungselement an der Stirnseite des Werkzeugkörpers als eine entsprechende vertiefte Struktur. Anderseits kann z.B. auch das Verdrehsicherungselement an der Stirnseite des Werkzeugkörpers als eine vorspringende Struktur und das komplementäre Verdrehsicherungselement an der Unterseite des Schneideinsatzes als eine entsprechende vertiefte Struktur.

Gemäß einer Weiterbildung weist die Unterseite des Schneideinsatzes zumindest ein Zentrierelement auf, das formschlüssig mit der Stirnseite des Werkzeugkörpers zusammenwirkt, um den Schneideinsatz mit Bezug auf die Längsachse des Werkzeugkörpers zu positionieren. In diesem Fall ist eine besonders einfache und zuverlässige Montage des Schneideinsatzes an dem Werkzeugkörper möglich. Das Zentrierelement kann z.B. durch einen Vorsprung an der Unterseite des Schneideinsatzes, insbesondere z.B. durch einen konischen oder anderweitig sich mit zunehmendem Abstand von der Unterseite verjüngenden Vorsprung, gebildet sein, der mit einer komplementär ausgebildeten Vertiefung in der Stirnseite des Werkzeugkörpers zusammenwirkt. Das Zentrierelement kann andererseits z.B. auch durch eine entsprechende Vertiefung in der Unterseite des Schneideinsatzes ausgebildet sein, die mit einem entsprechenden Vorsprung an der Stirnseite des Werkzeugkörpers zusammenwirkt. Es ist ferner möglich, das ein Verdrehsicherungselement derart ausgebildet wird, dass es gleichzeitig als Zentrierelement dient.

Gemäß einer Weiterbildung sind die Unterseite des Schneideinsatzes und die Stirnseite des Werkzeugkörpers derart ausgebildet, dass der Schneideinsatz nur in genau einer vorgegebenen Ausrichtung an dem Werkzeugkörper befestigbar ist. In dieser Weise wird eine besonders einfache und komfortable Benutzung ermöglicht, bei der sichergestellt ist, dass der Schneideinsatz nicht aus Versehen falsch montiert wird und dass die Schneidecken in der dafür vorgesehenen Ausrichtung an dem Werkzeugkörper ausgerichtet werden. Die Festlegung auf nur die vorgegebene Ausrichtung kann z.B. durch eine entsprechende asymmetrische Gestaltung von zueinander komplementären Verdrehsicherungselementen an der Stirnseite des Werkzeugkörpers und an der Unterseite des Schneideinsatzes realisiert werden.

Gemäß einer Weiterbildung stimmt eine Grundform der Stirnseite des Werkzeugkörpers im Wesentlichen mit einer Grundform des Schneideinsatzes überein. In diesem Fall ist erreicht, dass der Schneideinsatz umfangsseitig über den zumindest überwiegenden Umfang ausreichend freigestellt werden kann, um eine Drehbearbeitung mit dem zumindest überwiegenden Umfang der Oberseite zu ermöglichen, ohne dabei eine zusätzliche Verkippung der Längsachse des Werkzeugkörpers zu erfordern.

Gemäß einer Weiterbildung ist die Schneidkante entlang der gesamten umlaufenden Seitenfläche ausgebildet und steht über den gesamten Umfang in radialer Richtung über den Außenumfang der Stirnseite des Werkzeugkörpers hervor. In diesem Fall kann der gesamte Umfang der Oberseite des Schneideinsatzes in einfacher Weise zur zerspanenden Drehbearbeitung genutzt werden, indem der Werkzeugkörper gezielt gesteuert um seine Längsachse gedreht und gegebenenfalls linear in der Ebene senkrecht zur Werkstückachse bewegt wird.

Gemäß einer Weiterbildung weist die Seitenfläche über den gesamten Umfang des Schneideinsatzes einen positiven schneideinsatzspezifischen Freiwinkel auf. In diesem Fall ist sichergestellt, dass die bei der Drehbearbeitung als Freifläche dienende umlaufende Seitenfläche über den gesamten Außenumfang ausreichend freigestellt ist, sodass keine zusätzliche Verkippung der Längsachse des Werkzeugkörpers nötig ist, die die Ansteuerung des Werkzeugkörpers weiter verkomplizieren würde. Es ist zu beachten, dass der schneideinsatzspezifische Freiwinkel dabei nicht über den gesamten Umfang des Schneideinsatzes konstant sein muss, sondern die Seitenfläche in verschiedenen Abschnitten auch verschiedene Freiwinkel aufweisen kann.

Die Aufgabe wird auch durch ein Verfahren zur Drehbearbeitung eines Werkstücks gemäß Anspruch 9 gelöst. Vorteilhafte Weiterbildungen ergeben sich aus den abhängigen Ansprüchen.

Das Verfahren erfolgt mit einem Werkzeugsystem, bei dem ein auswechselbarer Schneideinsatz rotationsfest an einer Stirnseite eines Werkzeugkörpers derart angeordnet ist, dass eine als Spanfläche ausgebildete Oberseite senkrecht zu einer Längsachse L des Werkzeugkörpers ausgerichtet ist und eine zwischen der Oberseite und einer umlaufenden Seitenfläche ausgebildete Schneidkante mit zumindest zwei nutzbaren Schneidecken und beidseitig daran anschließenden Schneidkantenabschnitten in radialer Richtung bezüglich der Längsachse über den Außenumfang der Stirnseite des Werkzeugkörpers hervorsteht. Das Verfahren weist die Schritte auf:
- Rotieren des Werkstücks um eine Werkstückachse Z,
- Zerspanende Bearbeitung einer Oberfläche des Werkstücks mit einer der Schneidecken derart, dass die erzeugten Späne auf der Oberseite des Schneideinsatzes ablaufen,
- Verändern der Spanbildung durch gesteuerte Drehung des Werkzeugkörpers um dessen Längsachse und damit koordinierte Translationsbewegung des Werkzeugkörpers in einer Ebene XZ, die senkrecht zur Längsachse L verläuft, mit einer Translationsbewegungskomponente in einer Richtung senkrecht zur Werkstückachse Z.

Durch die gesteuerte Drehung des Werkzeugkörpers um dessen Längsachse und die damit koordinierte Translationsbewegung des Werkzeugkörpers in der Ebene senkrecht zur Längsachse mit einer Translationsbewegungskomponente senkrecht zur Werkstückachse Z können bei der Drehbearbeitung kontrolliert in besonders einfacher Weise die Zerspanungsbedingungen verändert werden. Es kann z.B. der Anstellwinkel der im Eingriff befindlichen Schneidkante gezielt verändert werden, ohne die Schnitttiefe zu verändern, oder ein anderer Schneidkantenabschnitt oder eine andere Schneidecke mit anderen Merkmalen kann zum Einsatz gebracht werden. Da der auswechselbare Schneideinsatz rotationsfest an dem Werkzeugkörper befestigt ist und mit zumindest zwei für die Zerspanung nutzbaren Schneidecken über den Außenumfang des Werkzeugkörpers hervorsteht, können dabei in besonders kompakter Anordnung mit einem einzigen Schneideinsatz verschiedene Zerspanungsbedingungen realisiert werden. Die gesteuerte Drehung des Werkzeugkörpers mit damit koordinierter Translationsbewegung des Werkzeugkörpers ermöglicht dabei eine Veränderung der Zerspanungsbedingungen, ohne die Zerspanung zu unterbrechen.

Gemäß einer Weiterbildung ist die Längsachse L des Werkzeugkörpers in der Ebene XY senkrecht zur Werkstückachse Z ausgerichtet. In diesem Fall können eine Veränderung des Anstellwinkels des in Eingriff mit dem Werkstück befindlichen Schneidkantenabschnittes und eine Nutzung verschiedener Schneidecken in steuerungstechnisch besonders einfacher Weise erfolgen. Besonders bevorzugt kann die Längsachse L des Werkzeugkörpers parallel zur Y-Achse der Drehbearbeitung ausgerichtet sein.

Gemäß einer Weiterbildung weisen die zumindest zwei nutzbaren Schneidecken eine erste Schneidecke und eine von der ersten Schneidecke verschiedene zweite Schneidecke auf. Wie bereits oben in Bezug auf das Werkzeugsystem beschrieben wurde, können sich die erste Schneidecke und die zweite Schneidecke dabei z.B. nur in einem Merkmal oder aber auch in einer Mehrzahl von Merkmalen voneinander unterscheiden.

Gemäß einer Weiterbildung erfolgen die gesteuerte Drehung des Werkzeugkörpers um dessen Längsachse und die damit koordinierte Translationsbewegung derart, dass ein Anstellwinkel einer aktiven zerspanenden Schneide verändert wird. Die Ansteuerung kann dabei z.B. bevorzugt derart erfolgen, dass nur der Anstellwinkel verändert wird, ohne weitere Zerspanungsparameter zu verändern. In diesem Fall kann z.B. ein Längsdrehen mit relativ flachem Anstellwinkel erfolgen und bei Annäherung an eine Stufe in dem Werkstück kann der Anstellwinkel vergrößert werden. Es ist zu beachten, dass dies nur eine mögliche Bearbeitungsoperation ist und auch zusätzliche andere Bearbeitungsoperationen vorgesehen sein können. Gemäß einer Weiterbildung erfolgen die gesteuerte Drehung des Werkzeugkörpers und die damit koordinierte Translationsbewegung derart, dass eine Werkstückkontur bei der Zerspanung unverändert bleibt. In diesem Fall kann z.B., ohne den Schnitt zu unterbrechen, während der Drehbearbeitung in einfacher Weise der Anstellwinkel der mit dem Werkstück im Eingriff befindlichen Schneidkante verändert werden. Es ist zu beachten, dass dies wiederum nur eine der möglichen Operationen ist und neben dieser z.B. zusätzlich auch andere Drehbearbeitungen ermöglicht sein können, bei denen z.B. auch die Schnitttiefe verändert werden kann.

Wenn die aktive Schneidecke bei der Zerspanung in einer Ebene angeordnet ist, die die Werkstückachse Z enthält, kann die Veränderung der Zerspanungsbedingungen durch Drehung des Werkzeugkörpers um dessen Längsachse in besonders einfacher Weise erfolgen.

Die Aufgabe wird auch durch die Verwendung eines Schneideinsatzes nach Anspruch 15 gelöst. Der Schneideinsatz weist eine als Spanfläche ausgebildete Oberseite, eine als Anlagefläche ausgebildete Unterseite, eine als Freifläche dienende umlaufende Seitenfläche und eine zwischen der Oberseite und der umlaufenden Seitenfläche ausgebildete Schneidkante mit zumindest zwei zerspanend nutzbaren Schneidecken und jeweils beidseitig daran anschließenden Schneidkantenabschnitten auf. Der Schneideinsatz wird in einem zuvor beschriebenen Verfahren zur spanabhebenden Drehbearbeitung verwendet. Durch die Verwendung des Schneideinsatzes werden die zuvor mit Bezug auf das Verfahren beschriebenen Vorteile erzielt. Insbesondere können z.B. mit nur einem Werkzeugkörper und einem darauf angeordneten Schneideinsatz verschiedene Drehbearbeitungen, wie z.B. Längsdrehen, Plandrehen und Kopierdrehen realisiert werden.

Gemäß einer Weiterbildung weist die Unterseite des Schneideinsatzes zumindest ein Verdrehsicherungselement auf, das formschlüssig mit einem komplementären Verdrehsicherungselement an der Stirnseite des Werkzeugkörpers zusammenwirkt. In diesem Fall ist eine zuverlässige, verdrehfeste Befestigung des Schneideinsatzes an dem Werkzeugkörper gegeben, die eine gezielte Veränderung der Zerspanungsbedingungen rmöglicht, und die umlaufende Freifläche kann über den gesamten Umfang des Schneideinsatzes frei von Befestigungsstrukturen für eine verdrehfeste Befestigung gehalten werden.

Gemäß einer Weiterbildung weist die Unterseite des Schneideinsatzes zumindest ein Zentrierelement auf, das formschlüssig mit der Stirnseite des Werkzeugkörpers zusammenwirkt, um den Schneideinsatz mit Bezug auf die Längsachse des Werkzeugkörpers zu positionieren. In diesem Fall ist eine besonders einfache und zuverlässige Montage des Schneideinsatzes an dem Werkzeugkörper ermöglicht.

Weitere Vorteile und Zweckmäßigkeiten der Erfindung ergeben sich anhand der nachfolgenden Beschreibung von Ausführungsbeispielen unter Bezugnahme auf die beigefügten Figuren.

### Von den Figuren zeigen:

- Fig. 1:: eine schematische Explosionsdarstellung in Seitenansicht eines Werkzeugsystems gemäß einer Ausführungsform;
- Fig. 2:: eine schematische perspektivische Explosionsdarstellung des Werkzeugsystems aus Fig. 1;
- Fig. 3:: eine schematische Detaildarstellung eines Details B aus Fig. 2;
- Fig. 4:: eine schematische perspektivische Darstellung der Unterseite des Schneideinsatzes bei der Ausführungsform;
- Fig. 5:: eine schematisch perspektivische Darstellung des Werkzeugsystems bei der zerspanenden Drehbearbeitung eines Werkstücks;
- Fig. 6:: eine schematische Darstellung des Werkzeugsystems bei der zerspanenden Drehbearbeitung eines Werkstücks mit einer Blickrichtung entlang der Werkstückachse;
- Fig. 7:: eine Fig. 5 entsprechende Darstellung mit einer Blickrichtung senkrecht zur Werkstückachse und senkrecht zur Längsachse des Werkzeugkörpers;
- Fig. 8:: eine Fig. 5 entsprechende Darstellung mit einer Blickrichtung entlang der Längsachse des Werkzeugkörpers;
- Fig. 9:: eine schematische Darstellung des Werkzeugsystems mit einer Blickrichtung entlang der Längsachse des Werkzeugkörpers mit gegenüber Fig. 8 um die Längsachse verdrehtem Werkzeugkörper;
- Fig. 10:: eine schematische Darstellung in Aufsicht auf einen Schneideinsatz gemäß einer ersten Abwandlung;
- Fig. 11:: eine perspektivische Darstellung von unten des Schneideinsatzes gemäß der ersten Abwandlung;
- Fig. 12:: eine perspektivische Darstellung von oben des Schneideinsatzes gemäß der ersten Abwandlung;
- Fig. 13:: eine schematische Darstellung in Aufsicht auf einen Schneideinsatz gemäß einer zweiten Abwandlung;
- Fig. 14:: eine schematische perspektivische Darstellung des Schneideinsatzes gemäß der zweiten Abwandlung;
- Fig. 15:: eine schematische Darstellung in Aufsicht auf einen Schneideinsatz gemäß einer dritten Abwandlung;
- Fig. 16:: eine schematische perspektivische Darstellung des Schneideinsatzes gemäß der dritten Abwandlung;
- Fig. 17:: eine schematische Darstellung in Aufsicht auf einen Schneideinsatz gemäß einer vierten Abwandlung;
- Fig. 18:: eine schematische perspektivische Darstellung des Schneideinsatzes gemäß der vierten Abwandlung;
- Fig. 19:: eine schematische perspektivische Darstellung in Aufsicht eines Schneideinsatzes gemäß einer fünften Abwandlung;
- Fig. 20:: eine schematische perspektivische Darstellung des Schneideinsatzes gemäß der fünften Abwandlung;
- Fig. 21:: eine schematische perspektivische Darstellung eines Schneideinsatzes gemäß einer sechsten Abwandlung;
- Fig. 22:: eine schematische perspektivische Darstellung eines Schneideinsatzes gemäß einer siebten Abwandlung;
- Fig. 23:: eine schematische perspektivische Darstellung eines Schneideinsatzes gemäß einer achten Abwandlung;
- Fig. 24:: eine schematische perspektivische Darstellung eines Schneideinsatzes gemäß einer neunten Abwandlung;
- Fig. 25:: eine schematische Darstellung in Aufsicht eines Schneideinsatzes gemäß einer zehnten Abwandlung; und
- Fig. 26:: eine schematische perspektivische Darstellung eines Schneideinsatzes gemäß einer zehnten Abwandlung.

### AUSFÜHRUNGSFORM

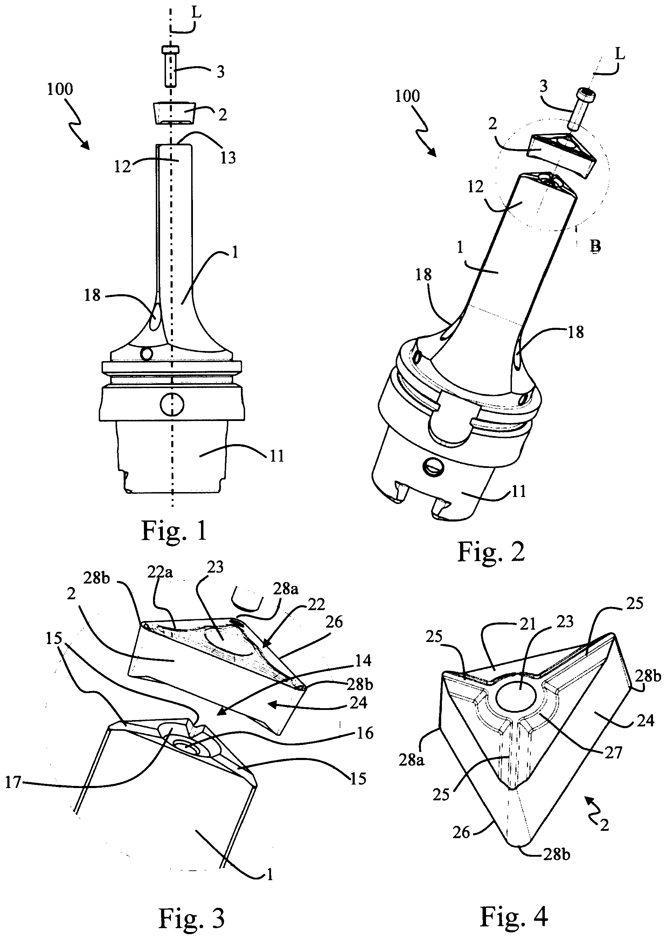

Eine Ausführungsform eines Werkzeugsystems für die zerspanende Drehbearbeitung wird im Folgenden unter Bezug auf die Fig. 1 bis Fig. 9 beschrieben.

Das in den Figuren schematisch dargestellte Werkzeugsystem 100 für eine zerspanende Drehbearbeitung von insbesondere metallischen Werkstoffen ausgelegt und weist einen Werkzeugkörper 1 und einen daran verdrehsicher und zentriert befestigten auswechselbaren Schneideinsatz 2 auf. Der Schneideinsatz 2 ist aus einem harten und verschleißbeständigen Material gebildet und kann insbesondere aus Hartmetall (cemented carbide), Cermet oder einer Schneidkeramik gebildet sein. Der Werkzeugkörper 1 ist bei der Ausführungsform aus einem zäheren Material, wie z.B. einem Werkzeugstahl, gefertigt. Es ist aber z.B. auch möglich, den Werkzeugkörper 1 aus einem Hartmetall (cemented carbide), einem Cermet oder anderen Materialien zu bilden.

Der Werkzeugkörper 1 erstreckt sich entlang einer Längsachse L und weist ein erstes Ende 11, das zur Befestigung an einer Bearbeitungsmaschine ausgebildet ist, und ein zweites Ende 12 mit einer sich quer zur Längsachse L erstreckenden Stirnseite 13 auf. Das erste Ende 11 ist zur Aufnahme in einer (nicht dargestellten) Werkzeugaufnahme der Bearbeitungsmaschine ausgebildet und kann z.B. für die Aufnahme in einer der auf dem Markt befindlichen Standardaufnahmen ausgebildet sein. Bei der dargestellten bevorzugten Ausgestaltung weist der Werkzeugkörper 1 eine interne Kühlmittelführung auf, die dazu ausgebildet ist, Kühlmittel von einer inneren Kühlmittelaufnahmeöffnung an dem ersten Ende 11 zu einer Mehrzahl von Kühlmittelaustrittsöffnungen 18 zu leiten. Die Kühlmittelaustrittsöffnungen 18 sind dazu ausgebildet, dass Kühlmittel in Richtung des zweiten Endes 12 und des daran angeordneten auswechselbaren Schneideinsatzes 2 austreten kann.

Wie in den Figuren zu sehen ist, ist der Werkzeugkörper 1 an seinem zweiten Ende 12 als Werkzeugschaft ausgebildet und hat in einem Schnitt senkrecht zur Längsachse L im Wesentlichen dieselbe Querschnittsform wie der Schneideinsatz 2, wie im Folgenden noch eingehender beschrieben wird. Der als Werkzeugschaft mit dieser Querschnittsform ausgebildete Bereich an dem zweiten Ende 12 erstreckt sich dabei über zumindest ein Zehntel der Gesamtlänge des Werkzeugkörpers 1. An der sich quer zur Längsachse L erstreckenden Stirnseite 13 ist ein Sitz 14 zur verdrehsicheren Befestigung des Schneideinsatzes 2 ausgebildet. Der Sitz 14 ist mit einer Gewindebohrung 16 zur Aufnahme des Gewindeabschnitts einer Befestigungsschraube 3 versehen, die dazu dient, den auswechselbaren Schneideinsatz 2 an dem Sitz 14 zu befestigen. Bei der Ausführungsform erstreckt sich die Gewindebohrung 16 koaxial zu der Längsachse L, was unter Stabilitätsgesichtspunkten vorteilhaft ist, es ist jedoch auch eine außermittige Anordnung der Gewindebohrung 16 möglich.

Um die verdrehsichere Befestigung des Schneideinsatzes 2 zu ermöglichen, weist der Sitz 14, wie insbesondere in Fig. 3 zu sehen ist, eine Mehrzahl von Verdrehsicherungselementen 15 auf, die dazu ausgebildet sind, mit dazu komplementären Verdrehsicherungselementen 25 an einer als Anlagefläche ausgebildeten Unterseite 21 des Schneideinsatzes 2 zusammenzuwirken. Obwohl bei der Ausführungsform drei solche Verdrehsicherungselemente 15 vorgesehen sind, können z.B. auch nur ein oder zwei oder auch mehr als drei solche Verdrehsicherungselemente 15 vorgesehen sein. Bei der dargestellten Ausführungsform sind die Verdrehsicherungselemente 15 an dem Sitz 14 als vertiefte Rillen ausgebildet, die sich jeweils in einer Richtung von dem Zentrum der Stirnseite 13 nach radial außen erstrecken. Die zu den Verdrehsicherungselementen 15 an dem Sitz 14 komplementären Verdrehsicherungselemente 25 an der Unterseite 21 des Schneideinsatzes 2 sind bei der Ausführungsform als von der Unterseite 21 vorspringende Rippen ausgebildet, die von einem Zentrum der Unterseite 21 radial nach außen verlaufen. Obwohl bei der Ausführungsform die Verdrehsicherungselemente 25 als vorspringende Rippen ausgebildet sind und die Verdrehsicherungselemente 15 an dem Sitz 14 als vertiefte Rillen, ist z.B. auch eine umgekehrte Ausgestaltung möglich. Ferner ist es auch nicht zwingend, dass die Anzahl der als vorspringende Rippen ausgebildeten Verdrehsicherungselemente genau mit der Anzahl der als vertiefte Rillen ausgebildeten komplementären Verdrehsicherungselemente übereinstimmt. Bei der Ausführungsform dienen die Verdrehsicherungselemente 25 aufgrund ihrer Anordnung gleichzeitig als Zentrierelemente zur Zentrierung des Schneideinsatzes 2 an dem Sitz 14.

Obwohl bei der Ausführungsform Verdrehsicherungselemente 25 gezeigt sind, die gleichzeitig als Zentrierelemente dienen, ist es z.B. auch möglich, diese Funktionalitäten zu entkoppeln und separat voneinander zumindest ein Verdrehsicherungselement und zumindest ein Zentrierelement vorzusehen.

Wie insbesondere in Fig. 4 zu sehen ist, weist die Unterseite 21 des Schneideinsatzes 2 ferner noch einen zentralen Vorsprung 27 auf, der ein Durchgangsloch 23 umgibt, durch das der Gewindeabschnitt der Befestigungsschraube 3 hindurchführbar ist. Der zentrale Vorsprung 27 verjüngt sich mit zunehmendem Abstand von der Unterseite des Schneideinsatzes 2 und kann sich z.B. insbesondere konisch verjüngen. Der zentrale Vorsprung 27 greift in eine entsprechende Struktur 17 an dem Sitz 14 ein, die bei der Ausführungsform als eine die Gewindebohrung 16 umgebende Einsenkung ausgebildet ist, die eine zu dem zentralen Vorsprung 27 komplementäre Form aufweist.

Die Unterseite 21 des Schneideinsatzes 2 und die Stirnseite 13 des Werkzeugkörpers 1 sind bei der Ausführungsform derart ausgebildet, dass der Schneideinsatz 2 nur in einer genau vorgegebenen Ausrichtung an dem Werkzeugkörper 1 befestigt werden kann. Bei der dargestellten Ausgestaltung ist dies durch eine asymmetrische Anordnung der Verdrehsicherungselemente 15 und 25 in Umfangsrichtung bezüglich der Gewindebohrung 16 bzw. dem Durchgangsloch 23 realisiert.

Der Schneideinsatz 2 weist eine der zuvor beschriebenen Unterseite 21 gegenüberliegende, als Spanfläche ausgebildete Oberseite 22 und eine als Freifläche ausgebildete umlaufende Seitenfläche 24 auf. Wie in Fig. 3 zu sehen ist, ist die Spanfläche mit einer Spanleitstufenstruktur 22a zum Formen, Ableiten und Brechen von bei der Drehbearbeitung entstehenden Spänen versehen. An dem Übergang von der Oberseite 22 zu der umlaufenden Seitenfläche 24 ist eine Schneidkante 26 ausgebildet. Die Schneidkante 26 weist eine Mehrzahl von Schneidecken 28 mit jeweils beidseitig daran angrenzenden Schneidkantenabschnitten auf. Die Schneidecken werden im Folgenden gemeinsam als Schneidecken 28 bezeichnet, wobei einzelne Schneidecken z.B. als erste Schneidecke 28a, zweite Schneidecke 28b, etc. bezeichnet werden. Bei der dargestellten Ausführungsform erstreckt sich die Schneidkante 26 über den gesamten Umfang des Schneideinsatzes 2 als für die Drehbearbeitung nutzbare Schneidkante. Alternativ dazu kann der Übergang von der Oberseite 22 zu der umlaufenden Seitenfläche 24 z.B. auch nur über einen Teil des Umfangs als für die Zerspanung nutzbare Schneidkante 26 ausgebildet sein.

Wie in den Figuren zu sehen ist, erstreckt sich die Oberseite 22 des Schneideinsatzes 2 senkrecht zu der Längsachse L des Werkzeugkörpers 1, wenn der Schneideinsatz 2 an dem Werkzeugkörper 1 befestigt ist. Obwohl der Schneideinsatz 2 bei der dargestellten Ausführungsform drei Schneidecken 28 aufweist, können z.B. auch nur zwei oder mehr als drei für die Drehbearbeitung nutzbare Schneidecken 28 mit daran angrenzenden Schneidkantenabschnitten vorgesehen sein.

Bei der Ausführungsform weist der Schneideinsatz 2 zwei verschiedene Arten von Schneidecken 28 auf, wie in den Figuren zu sehen ist. Eine zweite Schneidecke 28b unterscheidet sich bei der in den Fig. 1 bis Fig. 9 dargest Ilten Ausführungsform von einer ersten Schneidecke 28a, die einen ersten Eckenwinkel α1 aufweist, darin dass die beidseitig an die zweite Schneidecke 28b angrenzenden Schneidkantenabschnitte miteinander einen zweiten Eckenwinkel α2 einschließen, der von dem ersten Eckenwinkel α1 verschieden ist. Die Schneidkante 26 steht mit zumindest zwei für die Drehbearbeitung nutzbaren Schneidecken 28 in radialer Richtung bezüglich der Längsachse L über den Außenumfang der Stirnseite 13 des Werkzeugkörpers 1 hervor. Bei der konkret dargestellten bevorzugten Ausgestaltung steht die Schneidkante 26 über den gesamten Umfang des Schneideinsatzes 2 in radialer Richtung über die Stirnseite 13 des Werkzeugkörpers 1 hervor.

Die umlaufende Seitenfläche 24 weist bei dem Ausführungsbeispiel über den gesamten Umfang des Schneideinsatzes 1 einen positiven schneideinsatzspezifischen Freiwinkel auf, sodass sich die Seitenfläche 24 über den gesamten Umfang mit zunehmendem Abstand von der Oberseite 22 der Längsachse L annähert. Der schneideinsatzspezifische Freiwinkel kann dabei über den gesamten Umfang konstant sein, er kann aber auch in verschiedenen Bereichen unterschiedliche Werte annehmen.

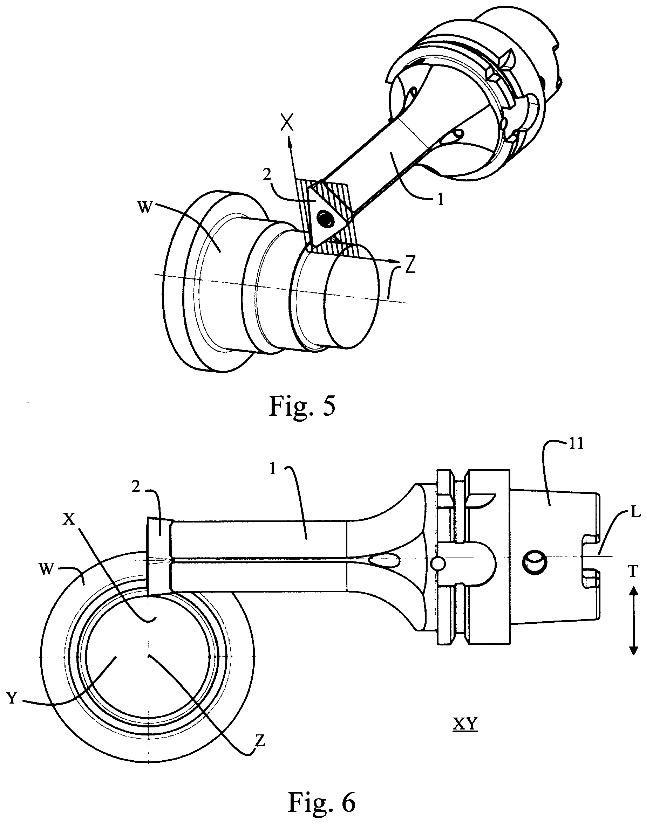

Im Folgenden wird mit Bezug auf die Fig. 5 bis Fig. 9 eine Verwendung des zuvor beschriebenen Werkzeugsystems 100 in einem Verfahren zur Drehbearbeitung eines Werkstücks W beschrieben.

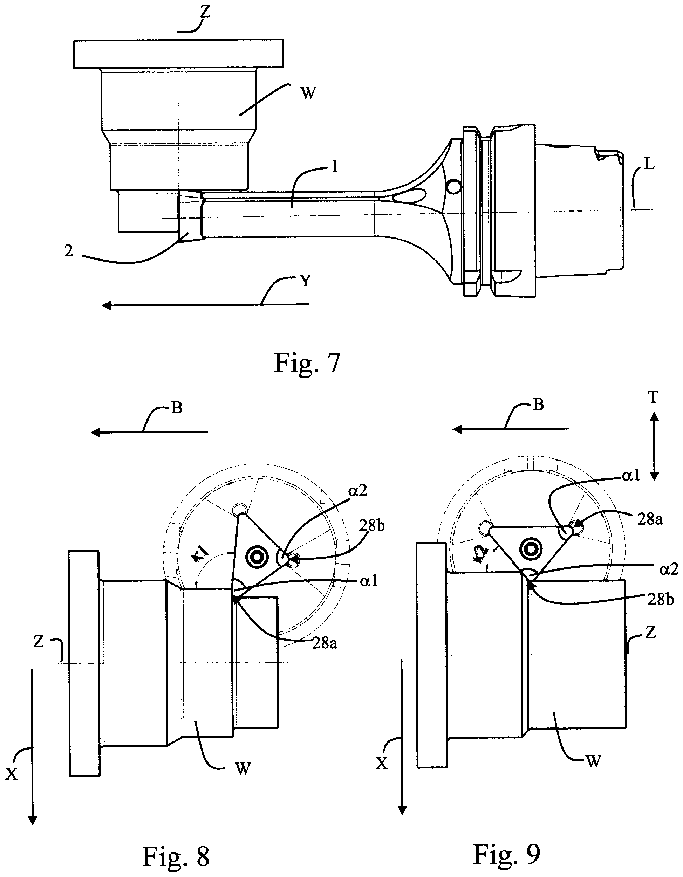

Bei dem Verfahren ist das Werkstück W derart in einer Bearbeitungsmaschine eingespannt, dass es um eine Werkstückachse Z rotiert wird. Die Längsachse L des Werkzeugkörpers 1 ist'bei dem Ausführungsbeispiel derart ausgerichtet, dass sie in einer Ebene XY liegt, die senkrecht zu der Werkstückachse Z verläuft. Konkret verläuft die Längsachse L bei der Ausführungsform parallel zur Y-Achse. Die in einer aktiven Zerspanungsposition befindliche Schneidecke 28 ist in einer Ebene angeordnet, die die Werkstückachse Z enthält, wie insbesondere in den Fig. 6 und Fig. 7 zu sehen ist, sodass die sich senkrecht zur Längsachse L des Werkzeugkörpers 1 erstreckende Oberseite 22 des Schneideinsatzes als Spanfläche zum Einsatz kommt. Bei der zerspanenden Drehbearbeitung wird nun z.B. zuerst die erste Schneidecke 28a mit dem rsten Eckenwinkel α1 in eine aktive Schneidposition gebracht, in der ein auf einer Seite an die erste Schneidecke 28a angrenzender Schneidkantenabschnitt unter einem ersten Anstellwinkel κ1 zur Dr hbearbeitung eingesetzt wird, wenn der W rkzeugkörper in einer Hauptbewegungsrichtung B parallel zu der Werkstückachse Z bewegt wird. Durch eine gesteuerte Drehung des Werkzeugkörpers 1 um dessen Längsachse L kann der Anstellwinkel κ1 z.B. verringert werden, um ein Längsdrehen mit einer hohen Vorschubgeschwindigkeit zu ermöglichen, oder der Anstellwinkel κ1 kann z.B. dann, wenn eine Schulter erzeugt werden soll, auf z.B. 90° vergrößert werden, um deren Seitenwand zu bearbeiten. Die Drehung des Werkzeugkörpers 1 um dessen Längsachse L bewirkt dabei eine Veränderung der Spanbildung. Um bei einer solchen Veränderung des Anstellwinkels κ1 die Schnitttiefe nicht in unerwünschter Weise zu verändern, erfolgt bei dem Verfahren gemäß der Ausführungsform koordiniert mit der gesteuerten Drehung des Werkzeugkörpers 1 eine Translationsbewegung des Werkzeugkörpers in der Ebene XZ, die senkrecht zur Längsachse L des Werkzeugkörpers 1 verläuft. Die Translationsbewegung weist dabei auch eine Richtungskomponente in der X-Richtung, senkrecht zur Werkstückachse Z auf.

Durch die mit der gesteuerten Drehung um die Längsachse L koordinierte Translationsbewegung T des Werkzeugkörpers wird erreicht, dass der Anstellwinkel κ1 verändert werden kann, ohne die Position der Schneidecke im Bezug zum Werkstück zu verändern.

Anstelle der zuvor beschriebenen Veränderung nur des Anstellwinkels κ1, unter dem der zerspanende Eingriff der Schneidkante 26 mit dem Werkstück W erfolgt, kann bei dem Verfahren die Spanbildung auch dadurch verändert werden, dass durch gesteuerte Drehung des Werkzeugkörpers 1 um dessen Längsachse L anstelle der ersten Schneidecke 28a die von der ersten Schneidecke 28a verschiedene zweite Schneidecke 28b in eine aktive Schneidposition gebracht wird, wie z.B. in Fig. 9 zu sehen ist. Auch in diesem Fall erfolgt koordiniert mit der gesteuerten Drehung des Werkzeugkörpers 1 um einen vorbestimmten Winkel eine Translationsbewegung T des Werkzeugkörpers 1 in der Ebene XZ, die senkrecht zur Längsachse L verläuft, mit einer Translationsbewegungskomponente senkrecht zur Werkstückachse Z. Durch die koordinierte Translationsbewegung T kann eine Veränderung der Schnitttiefe kompensiert werden, die ansonsten aufgrund eines unterschiedlichen radialen Abstands der ersten Schneidecke 28a und der zweiten Schn idecke 28b von der Längsachse L des Werkzeugkörpers 1 folgen würde. Wie in Fig. 9 schematisch dargestellt ist, kann die Drehbearbeitung mit der zweiten Schneidecke 28b z.B. mit einer Ausrichtung der in Eingriff befindlichen Schneidkante unter einem anderen Anstellwinkel κ2 erfolgen.

Aufgrund der gesteuerten Drehung des Werkzeugkörpers 1 um einen vorgegebenen Winkel um die Längsachse L und die damit koordinierte Translationsbewegung T in der Ebene XZ mit einer Translationsbewegungskomponente in der Richtung senkrecht zur Werkstückachse Z kann somit während der Drehbearbeitung der Anstellwinkel κ1, κ2 in einfacher Weise verändert werden, um die Spanbildung zu verändern. Dies kann z.B. in Kombination mit einer Veränderung der Vorschubrate oder von anderen Parametern erfolgen. Ferner kann aufgrund der gesteuerten Drehung des Werkzeugkörpers 1 um einen vorgegebenen Winkel um die Längsachse L und die damit koordinierte Translationsbewegung in der Ebene XZ mit einer Translationsbewegungskomponente in der Richtung orthogonal zur Werkstückachse Z auch während der Drehbearbeitung gezielt die in Materialeingriff befindliche Schneidecke 28 gewechselt werden und somit statt einer ersten Schneidecke 28a eine davon verschiedene zweite Schneidecke 28b in die aktive Schneidposition gebracht werden.

Obwohl in Bezug auf die Ausführungsform eine Realisierung beschrieben wurde, bei der das Verfahren bei einem auswechselbaren Schneideinsatz 2 zum Einsatz kommt, der zwei verschiedene Arten von Schneidecken 28a, 28b aufweist, kann das Verfahren auch bei einem Schneideinsatz zum Einsatz kommen, der eine Mehrzahl von gleichartigen Schneidecken 28 aufweist.

Obwohl eine Ausführungsform beschrieben wurde, bei der sich eine erste Schneidecke 28a und eine zweite Schneidecke 28b in ihrem Eckenwinkel α1, α2 unt rscheiden, ist es z.B. auch möglich, dass sich die Schneidecken alternativ dazu oder zusätzlich dazu in dem Eckenradius unterscheiden, unter dem die jeweiligen Schneidecken gekrümmt ausgebildet sind.

### ABWANDLUNGEN

Im Folgenden werden einige Abwandlungen der zuvor beschriebenen Ausführungsform beschrieben, wobei lediglich die Unterschiede in den auswechselbaren Schneideinsätzen eingehender beschrieben werden und jeweils dieselben Bezugszeichen verwendet werden. Es versteht sich, dass die Grundform der Stirnseite 13 des Werkzeugkörpers 1 jeweils an die Form und Größe des veränderten Schneideinsatzes angepasst wird.

Im Folgenden werden lediglich die Unterschiede zu der zuvor beschriebenen Ausführungsform beschrieben und es werden dieselben Bezugszeichen verwendet.

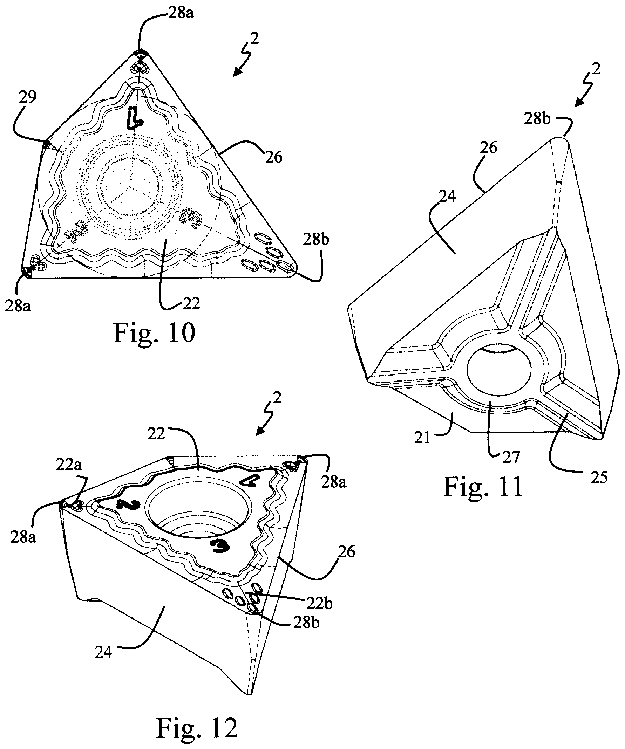

In den Fig. 10 bis Fig. 12 ist ein Schneideinsatz 2 gemäß einer ersten Abwandlung gezeigt, bei dem neben drei für die Zerspanung einsetzbaren Schneidecken 28a, 28b auch eine weitere Ecke 29 vorgesehen ist, wie insbesondere in Fig. 10 zu sehen ist. Bei der ersten Abwandlung unterscheidet sich eine erste Schneidecke 28a von einer zweiten Schneidecke 28b in der Ausgestaltung der auf der Oberseite 22 im Bereich der jeweiligen Schneidecke 28a, 28b ausgebildeten Spanleitstufenstrukturen 22a und 22b, wie insbesondere in den Fig. 10 und Fig. 12 zu sehen ist. Bei dem konkret dargestellten Beispiel unterscheiden sich die Schneidecken zusätzlich auch noch in dem Eckenwinkel und in dem Eckenradius, unter dem die Schneidecken ausgebildet sind. Alternativ dazu ist es aber z.B. auch möglich, dass sich die erste Schneidecke 28a und die zweite Schneidecke 28b nur in der Ausgestaltung der Spanleitstufenstrukturen 22a, 22b voneinander unterscheiden und in ihren sonstigen Merkmalen übereinstimmen.

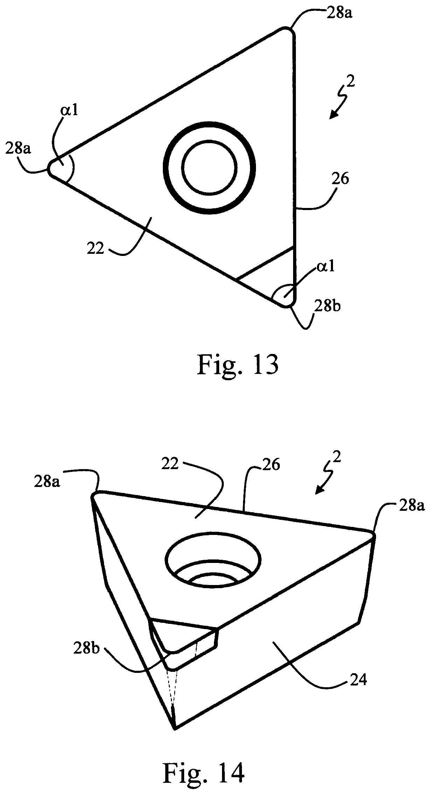

In den Fig. 13 und Fig. 14 ist ein Schneideinsatz 2 gemäß einer zweiten Abwandlung gezeigt, bei dem sich eine erste Schneidecke 28a und eine zweite Schneidecke 28b in dem Material unterscheiden, aus welchem diese ausgebildet sind. In diesem Beispiel weisen die Schneidecken 28a, 28b zwar alle denselben Eckenwinkel α1 und denselben Eckenradius auf, aber das Material der Schneidecken unterscheidet sich voneinander. Z.B. kann der Schn ideinsatz 2 aus einem Hartmetall (cemented carbide) gebild t sein und die zweite Schneidecke 28b kann aus einem anderen Hartmetall mit unterschiedlichen Eigenschaften in Bezug auf Zähigkeit, Härte, Korngröße, Binder, etc, gebildet sein. Die zweite Schneidecke 28b kann z.B. auch aus einem anderen Hartwerkstoff wie insbesondere Cermet, PKD (polykristallinem Diamant), CVD-Diamant, CBN (kubisches Bornitrid) oder einer Schneidkeramik gebildet sein. Alternativ zu einer solchen Ausbildung aus einem anderen Material kann die zweite Schneidecke 28b z.B. auch nur mit einer anderen Beschichtung versehen sein als die erste Schneidecke 28a. Obwohl in dem Beispiel nur zwei verschiedene Schneidecken 28a und 28b gezeigt sind, können z.B. auch mehr als zwei verschiedene Schneidecken 28 vorgesehen werden und/oder die Schneidecken 28a, 28b können sich auch noch in weiteren Eigenschaften voneinander unterscheiden.

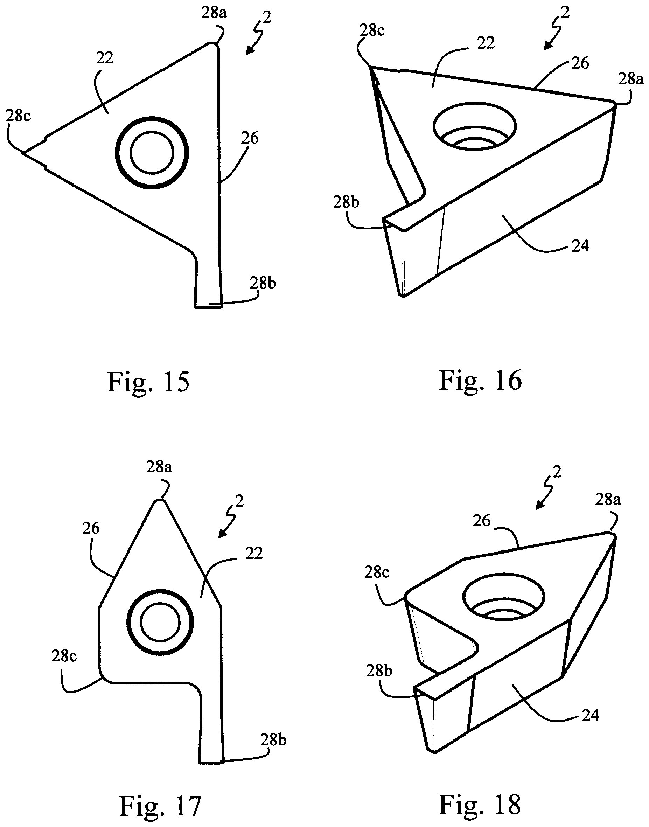

In den Fig. 15 und Fig. 16 ist eine auswechselbarer Schneideinsatz 2 gemäß einer dritten Abwandlung gezeigt, bei dem die verschiedenen Schneidecken zu verschiedenen Bearbeitungsoperationen ausgebildet sind. Eine erste Schneidecke 28a ist, wie bei den zuvor beschriebenen Ausgestaltungen als eine "normale" Schneidecke zum beispielsweise Längsdrehen als Bearbeitungsoperation ausgebildet. Eine zweite Schneidecke 28b ist bei der dritten Abwandlung als eine Schneidecke zum Einstechen bzw. Ausbilden einer Rille ausgebildet. Eine dritte Schneidecke 28c ist bei der dritten Abwandlung als eine Schneidecke zum Gewindedrehen ausgebildet. In diesem Fall können bei dem Verfahren durch die gesteuerte Drehung des Werkzeugkörpers 1 um dessen Längsachse L und die damit koordinierte Translationsbewegung des Werkzeugkörpers 1 in der Ebene XZ mit einer Translationsbewegungskomponente orthogonal zur Werkstückachse Z verschiedene Bearbeitungsoperationen der Drehbearbeitung mit dem Schneideinsatz 2 durchgeführt werden, ohne dass ein Werkzeugwechsel in der Bearbeitungsmaschine dazu erforderlich wäre.

Auch bei der in den Fig. 17 und Fig. 18 dargestellten vierten Abwandlung ist eine erste Schneidecke 28a als eine "normale" Schneidecke zum beispielsweise Längsdrehen ausgebildet und eine zweite Schneidecke 28b als eine Schneidecke zum Einstechen. Im Unterschied zu der zuvor beschriebenen dritten Abwandlung ist aber eine dritte Schneidecke 28c ebenfalls als eine "normale" Schneidecke ausgebildet, die aber einen anderen Eckenwinkel als die erste Schneidecke 28a aufweist. Ferner unterscheidet sich die Grundform des Schneideinsatzes 2 gemäß der vierten Abwandlung von der Grundform des Schneideinsatzes 2 gemäß der dritten Abwandlung, wie in den Fig. 17 und Fig. 18 zu sehen ist.

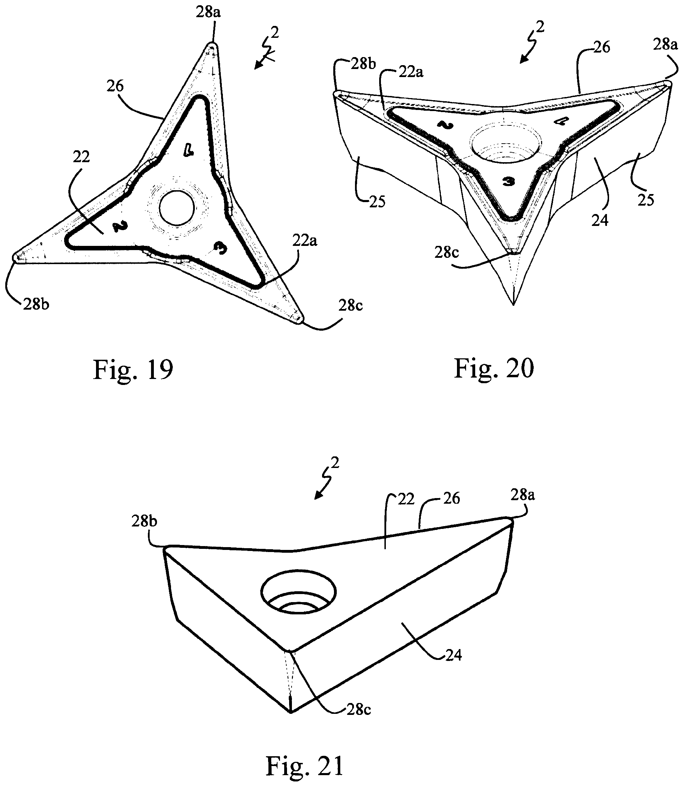

Eine fünfte Abwandlung eines Schneideinsatzes 2, der bei dem beschriebenen Verfahren zum Einsatz kommen kann, ist in den Fig. 19 und Fig. 20 gezeigt. Bei der fünften Abwandlung weist der Schneideinsatz 2 wiederum insgesamt drei für die Drehbearbeitung nutzbare Schneidecken 28a, 28b, 28c auf, die in diesem Fall z.B. identisch zueinander ausgebildet sind. Der Schneideinsatz 2 weist bei dieser Abwandlung in Aufsicht die Form eines dreizackigen Sterns auf. Alternativ zu der gleichartigen Ausbildung der drei nutzbaren Schneidecken 28a, 28b, 28c können die Schneidecken z.B. auch mit unterschiedlichen Verstärkungsfasen versehen sein, die sich jeweils zumindest im Bereich der Schneidecke und der daran anschließenden Schneidkantenabschnitte erstrecken. Z.B. können sich diese Verstärkungsfasen in ihrer Breite (gemessen senkrecht zur Schneidkante) oder in ihrem Winkel (gemessen gegenüber einer Ebene senkrecht zur Haupterstreckungsrichtung der Oberseite 22) unterscheiden. Auch in diesem Fall können die verschiedenen Schneidecken für z.B. die Drehbearbeitung verschiedener Materialien oder für die Drehbearbeitung mit unterschiedlichen Zerspanungsparametern eingesetzt werden. Es ist zu beachten, dass z.B. unterschiedliche solche Verstärkungsfasen nicht auf die in den Fig. 19 und Fig. 20 gezeigte Grundform des Schneideinsatzes 2 beschränkt sind, sondern auch bei anderen Grundformen und in Kombination auch mit weiteren Unterschieden zwischen den Schneidecken 28a, 28b, 28c vorgesehen werden können.

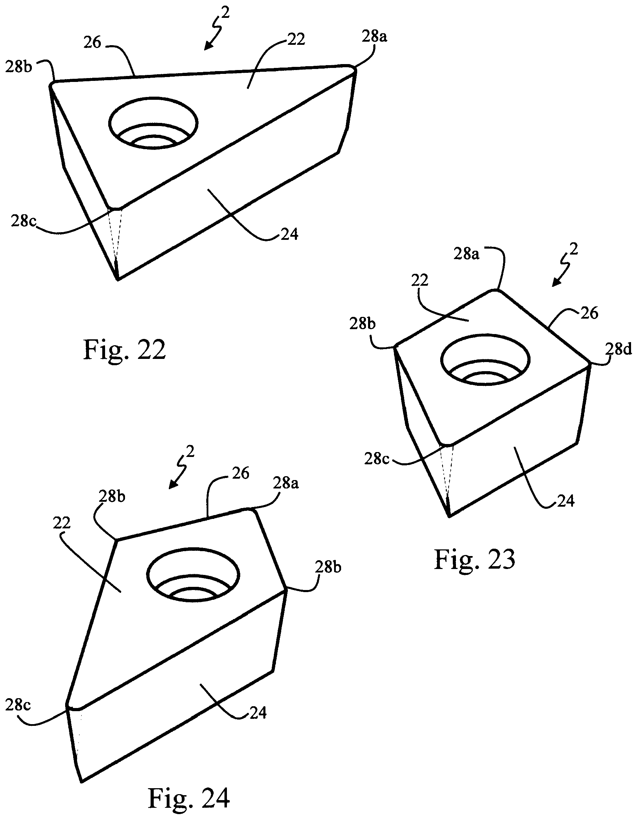

In den Fig. 21 bis Fig. 24 sind weitere Abwandlungen von Schneideinsätzen 2 schematisch dargestellt, die jeweils zumindest zwei voneinander verschiedene Schneidecken 28a, 28b aufweisen. Es ist zu beachten, dass zusätzlich zu den dargest Ilten Unterschieden in den Eckenwinkeln auch wiederum weitere Unterschiede zwischen den Schneidecken vorgesehen sein können.

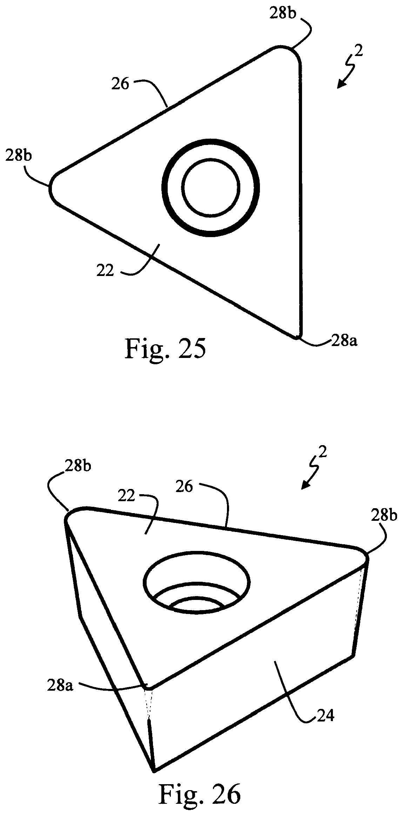

Bei dem Schneideinsatz 2 gemäß einer zehnten Abwandlung, der in den Fig. 25 und Fig. 26 gezeigt ist, weist der Schneideinsatz 2 insgesamt eine im Wesentlichen dreieckige Form auf, bei der die Schneidecken alle denselben Eckenwinkel aufweisen. Bei dieser Ausführungsform ist eine erste Schneidecke 28a mit einem kleinen Eckenradius für z.B. eine Schlichtbearbeitung ausgebildet, wohingegen die anderen Schneidecken als zweite Schneidecken 28b mit einem größeren Eckenradius für z.B. eine Schruppbearbeitung ausgebildet sind.

Obwohl nicht in Bezug auf alle Abwandlungen die zuvor beschriebenen Verdrehsicherungselemente und Zentrierelemente an der Unterseite 21 des Schneideinsatzes 2 gezeigt sind, können diese Elemente auch bei den Abwandlungen bevorzugt vorgesehen sein.

Es ist zu beachten, dass bei den Schneideinsätzen 2 beliebige Kombinationen der zuvor beschriebenen Unterschiede zwischen den jeweiligen Schneidecken 28 möglich sind.

## Patentansprüche

1. Werkzeugsystem (100) für die zerspanende Drehbearbeitung mit:
einem Werkzeugkörper (1), der sich entlang einer Längsachse (L) erstreckt und ein erstes Ende (11) zur Verbindung mit einer Bearbeitungsmaschine und ein zweites Ende (12) mit einer Stirnseite (13), an der ein Sitz (14) für einen auswechselbaren Schneideinsatz ausgebildet ist, aufweist, und
einem rotationsfest an dem Sitz (14) befestigten auswechselbaren Schneideinsatz (2),
wobei der Schneideinsatz (2) eine als Anlagefläche ausgebildete Unterseite (21), eine als Spanfläche ausgebildete Oberseite (22) und eine als Freifläche ausgebildete umlaufende Seitenfläche (24) aufweist und an einem Übergang von der Oberseite (22) zu der umlaufenden Seitenfläche (24) eine Schneidkante (26) ausgebildet ist,
wobei der Schneideinsatz (2) derart an dem Sitz (14) angeordnet ist, dass sich die Oberseite (22) senkrecht zu der Längsachse (L) des Werkzeugkörpers (1) erstreckt, **dadurch gekennzeichnet, dass** die Schneidkante (26) mit zumindest zwei nutzbaren Schneidecken (28a, 28b, 28c) und beidseitig daran anschließenden Schneidkantenabschnitten in radialer Richtung bezüglich der Längsachse (L) über den Außenumfang der Stirnseite (13) des Werkzeugkörpers (1) hervorsteht,
wobei die zumindest zwei nutzbaren Schneidecken (28a, 28b, 28c) zumindest eine erste Schneidecke (28a) und eine von der ersten Schneidecke verschiedene zweite Schneidecke (28b) aufweisen.

2. Werkzeugsystem nach Anspruch 1, wobei sich die erste Schneidecke (28a) und die zweite Schneidecke (28b) in einem oder mehreren der folgenden Merkmale voneinander unterscheiden:
einem Eckenwinkel (α1, α2), einer Eckenausführung, einem Winkel und/oder einer Breite einer entlang der Schneidecke verlaufenden Verstärkungsfase, einer auf der Spanfläche ausgebildeten Spanleitstufenstruktur (22a), einem Material und/oder einer darauf aufgebrachten Hartstoffbeschichtung des Schneideinsatzes im Bereich der Schneidecken, einer Bearbeitungsoperation, zu der die Schneidecke ausgebildet ist.

3. Werkzeugsystem nach Anspruch 1 oder 2, wobei die Unterseite (21) des Schneideinsatzes (2) zumindest ein Verdrehsicherungselement (25) aufweist, das formschlüssig mit einem komplementären Verdrehsicherungselement (15) an der Stirnseite (13) des Werkzeugkörpers (1) zusammenwirkt.

4. Werkzeugsystem nach einem der vorangehenden Ansprüche, wobei die Unterseite (21) des Schneideinsatzes (2) zumindest ein Zentrierelement aufweist, das formschlüssig mit der Stirnseite (13) des Werkzeugkörpers (1) zusammenwirkt, um den Schneideinsatz (2) mit Bezug auf die Längsachse (L) des Werkzeugkörpers (1) zu positionieren.

5. Werkzeugsystem nach einem der vorangehenden Ansprüche, wobei die Unterseite (21) des Schneideinsatzes (2) und die Stirnseite (13) des Werkzeugkörpers (1) derart ausgebildet sind, dass der Schneideinsatz (2) nur in einer vorgegebenen Ausrichtung an dem Werkzeugkörper (1) befestigbar ist.

6. Werkzeugsystem nach einem der vorangehenden Ansprüche, wobei eine Grundform der Stirnseite (13) des Werkzeugkörpers (1) mit einer Grundform des Schneideinsatzes (2) übereinstimmt.

7. Werkzeugsystem nach einem der vorangehenden Ansprüche, wobei die Schneidkante (26) entlang der gesamten umlaufenden Seitenfläche (24) ausgebildet ist und über den gesamten Umfang in radialer Richtung über den Außenumfang der Stirnseite (13) des Werkzeugkörpers (1) hervorsteht.

8. Werkzeugsystem nach einem der vorangehenden Ansprüche, wobei die Seitenfläche (24) über den gesamten Umfang des Schneideinsatzes (2) einen positiven schneideinsatzspezifischen Freiwinkel aufweist.

9. Verfahren zur Drehbearbeitung eines Werkstücks (W) mit einem Werkzeugsystem (100), bei dem ein auswechselbarer Schneideinsatz (2) rotationsfest an einer Stirnseite (13) eines Werkzeugkörpers (1) derart angeordnet ist, dass eine als Spanfläche ausgebildete Oberseite (22) senkrecht zu einer Längsachse (L) des Werkzeugkörpers (1) ausgerichtet ist, wobei der Schneideinsatz (2) eine zwischen der Oberseite (22) und einer umlaufenden Seitenfläche (24) ausgebildete Schneidkante (26) aufweist, wobei das Verfahren die Schritte aufweist:
- Rotieren des Werkstücks (W) um eine Werkstückachse (Z),
- Zerspanende Bearbeitung einer Oberfläche des Werkstücks (W) mit einer der Schneidecken (28a, 28b, 28c) derart, dass die erzeugten Späne auf der Oberseite (22) des Schneideinsatzes (2) ablaufen,
- Verändern der Spanbildung durch gesteuerte Drehung des Werkzeugkörpers (1) um dessen Längsachse (L) und damit koordinierte Translationsbewegung (T) des Werkzeugkörpers (1) in einer Ebene, die senkrecht zur Längsachse (L) verläuft, mit einer Translationsbewegungskomponente senkrecht zur Werkstückachse (Z),
**dadurch gekennzeichnet, dass** die Schneidkante (26) mit zumindest zwei nutzbaren Schneidecken (28a, 28b, 28c) und beidseitig daran anschließenden Schneidkantenabschnitten in radialer Richtung bezüglich der Längsachse (L) über den Außenumfang der Stirnseite (13) des Werkzeugkörpers (1) hervorsteht.

10. Verfahren nach Anspruch 9, wobei die Längsachse (L) des Werkzeugkörpers (1) in der Ebene (XY) senkrecht zur Werkstückachse (Z) ausgerichtet ist.

11. Verfahren nach einem der Ansprüche 9 oder 10, wobei die zumindest zwei nutzbaren Schneidecken (28a, 28b, 28c) eine erste Schneidecke (28a) und eine von der ersten Schneidecke (28a) verschiedene zweite Schneidecke (28b) aufweisen.

12. Verfahren nach einem der Ansprüche 9 bis 11, wobei die gesteuerte Drehung des Werkzeugkörpers (1) um dessen Längsachse (L) und die damit koordinierte Translationsbewegung (T) derart erfolgen, dass ein Anstellwinkel (κ1, κ2) einer aktiven zerspanenden Schneide verändert wird.

13. Verfahren nach einem der Ansprüche 9 bis 12, wobei die gesteuerte Drehung des Werkzeugkörpers (1) und die damit koordinierte Translationsbewegung (T) derart erfolgen, dass eine Werkstückkontur bei der Zerspanung unverändert bleibt.

14. Verfahren nach einem der Ansprüche 9 bis 13, wobei die aktive Schneidecke bei der Zerspanung in einer Ebene angeordnet ist, die die Werkstückachse (Z) enthält.

15. Verwendung eines Schneideinsatzes (2), der eine als Spanfläche ausgebildete Oberseite (22), eine als Anlagefläche ausgebildete Unterseite (21), eine als Freifläche dienende umlaufende Seitenfläche (24) und eine zwischen der Oberseite (22) und der umlaufenden Seitenfläche (24) ausgebildete Schneidkante (26) mit zumindest zwei zerspanend nutzbaren Schneidecken (28a, 28b, 28c) und jeweils beidseitig daran anschließenden Schneidkantenabschnitten aufweist, in einem Verfahren zur spanabhebenden Drehbearbeitung nach einem der Ansprüche 9 bis 14.

16. Verwendung nach Anspruch 15, bei der die Unterseite (21) des Schneideinsatzes (2) zumindest ein Verdrehsicherungselement (25) aufweist, das formschlüssig mit einem komplementären Verdrehsicherungselement (15) an der Stirnseite (13) des Werkzeugkörpers (1) zusammenwirkt.

17. Verwendung nach Anspruch 15 oder 16, bei der die Unterseite (21) des Schneideinsatzes (2) zumindest ein Zentrierelement aufweist, das formschlüssig mit der Stirnseite (13) des Werkzeugkörpers (1) zusammenwirkt, um den Schneideinsatz (2) mit Bezug auf die Längsachse (L) des Werkzeugkörpers (1) zu positionieren.

## Claims

1. A tool system (100) for turning machining having:
a tool body (1) which extends along a longitudinal axis (L) and has a first end (11) for connecting to a machine tool and a second end (12) having an end side (13) on which a seat (14) for an interchangeable cutting insert is formed, and
an interchangeable cutting insert (2) fastened to the seat (14) in a rotationally fixed manner,
wherein the cutting insert (2) has an underside (21) designed as a bearing face, an upper side (22) designed as a rake face, and a peripheral lateral face (24) designed as a flank, and a cutting edge (26) is formed at a transition from the upper side (22) to the peripheral lateral face (24),
wherein the cutting insert (2) is arranged on the seat (14) in such a way that the upper side (22) extends perpendicularly to the longitudinal axis (L) of the tool body (1),
**characterized in that** the cutting edge (26) projects in the radial direction with respect to the longitudinal axis (L) beyond the outer circumference of the end face (13) of the tool body (1) by way of at least two usable cutting corners (28a, 28b, 28c) and cutting edge portions adjoining the latter on both sides,
wherein the at least two usable cutting corners (28a, 28b, 28c) have at least one first cutting corner (28a) and one second cutting corner (28b) different than the first cutting corner.

2. The tool system as claimed in claim 1, wherein the first cutting corner (28a) and the second cutting corner (28b) differ from one another in one or more of the following features:
a corner angle (α1, α2), a corner configuration, an angle and/or a width of a reinforcing bevel running along the cutting corner, a chip geometry structure (22a) formed on the rake face, a material and/or a hard substance coating, applied thereto, of the cutting insert in the region of the cutting corners, or a machine operation for which the cutting corner is designed.

3. The tool system as claimed in claim 1 or 2, wherein the underside (21) of the cutting insert (2) has at least one anti-rotation safeguarding element (25) which interacts in a form-fitting manner with a complementary anti-rotation safeguarding element (15) on the end face (13) of the tool body (1).

4. The tool system as claimed in one of the preceding claims, wherein the underside (21) of the cutting insert (2) has at least one centering element which interacts in a form-fitting manner with the end face (13) of the tool body (1) in order to position the cutting insert (2) with respect to the longitudinal axis (L) of the tool body (1).

5. The tool system as claimed in one of the preceding claims, wherein the underside (21) of the cutting insert (2) and the end side (13) of the tool body (1) are designed in such a way that the cutting insert (2) can be fastened to the tool body (1) only in one predetermined orientation.

6. The tool system as claimed in one of the preceding claims, wherein a basic shape of the end side (13) of the tool body (1) corresponds with a basic shape of the cutting insert (2).

7. The tool system as claimed in one of the preceding claims, wherein the cutting edge (26) is formed along the entire peripheral lateral face (24) and projects over the entire circumference in the radial direction beyond the outer circumference of the end face (13) of the tool body (1).

8. The tool system as claimed in one of the preceding claims, wherein the lateral face (24) has a positive cutting insert-specific clearance angle over the entire circumference of the cutting insert (2).

9. A method for turning a workpiece (W) with a tool system (100) in which an interchangeable cutting insert (2) is arranged on an end face (13) of a tool body (1) in a rotationally fixed manner in such a way that an upper side (22) designed as a rake face is oriented perpendicularly to a longitudinal axis (L) of the tool body (1), wherein the cutting insert (2) has a cutting edge (26) formed between the upper side (22) and a peripheral lateral face (24),
wherein the method comprises the following steps:
- Rotating the workpiece (W) about a workpiece axis (Z),
- Machining a surface of the workpiece (W) with one of the cutting corners (28a, 28b, 28c) in such a way that the chips generated run off on the upper side (22) of the cutting insert (2),
- Changing the chip formation by controlled rotation of the tool body (1) about its longitudinal axis (L) and translational movement (T), coordinated therewith, of the tool body (1) in a plane, which runs perpendicularly to the longitudinal axis (L), with a translational movement component perpendicular to the workpiece axis (Z),
**characterized in that** the cutting edge (26) projects in the radial direction with respect to the longitudinal axis (L) beyond the outer circumference of the end face (13) of the tool body (1) by way of at least two usable cutting corners (28a, 28b, 28c) and cutting edge portions adjoining the latter on both sides.

10. The method as claimed in claim 9, wherein the longitudinal axis (L) of the tool body (1) is oriented in the plane (XY) perpendicular to the workpiece axis (Z).

11. The method as claimed in either of claims 9 and 10, wherein the at least two usable cutting corners (28a, 28b, 28c) have a first cutting corner (28a) and a second cutting corner (28b) different than the first cutting corner (28a).

12. The method as claimed in one of claims 9 to 11, wherein the controlled rotation of the tool body (1) about its longitudinal axis (L) and the translational movement (T), coordinated therewith, occur in such a way that a setting angle (κ1, κ2) of an active machining cutting edge is changed.

13. The method as claimed in one of claims 9 to 12, wherein the controlled rotation of the tool body (1) and the translational movement (T), coordinated therewith, occur in such a way that a workpiece contour remains unchanged during the machining.

14. The method as claimed in one of claims 9 to 13, wherein, during the machining, the active cutting corner is arranged in a plane which contains the workpiece axis (Z).

15. The use of a cutting insert (2) which has an upper side (22) designed as a rake face, an underside (21) designed as a bearing face, a peripheral lateral face (24) serving as a flank, and a cutting edge (26), which is formed between the upper side (22) and the peripheral lateral face (24), with at least two cutting corners (28a, 28b, 28c) which can be used for machining and cutting edge portions adjoining the latter on both sides in each case, in a method for chip-removing turning as claimed in one of claims 9 to 14.

16. The use as claimed in claim 15, in which the underside (21) of the cutting insert (2) has at least one anti-rotation safeguarding element (25) which interacts in a form-fitting manner with a complementary anti-rotation safeguarding element (15) on the end face (13) of the tool body (1).

17. The use as claimed in claim 15 or 16, in which the underside (21) of the cutting insert (2) has at least one centering element which interacts in a form-fitting manner with the end face (13) of the tool body (1) in order to position the cutting insert (2) with respect to the longitudinal axis (L) of the tool body (1).

## Revendications

1. Système d'outil (100) pour l'usinage par tournage par enlèvement de copeaux, comprenant :
un corps d'outil (1) qui s'étend le long d'un axe longitudinal (L) et qui présente une première extrémité (11) pour la connexion à une machine d'usinage et une deuxième extrémité (12) avec un côté frontal (13), au niveau duquel est réalisé un siège (14) pour un insert de coupe remplaçable, et un insert de coupe remplaçable (2) fixé de manière solidaire en rotation au siège (14),
l'insert de coupe (2) présentant un côté inférieur (21) réalisé sous forme de surface d'appui, un côté supérieur (22) réalisé sous forme de surface d'enlèvement de copeaux et une surface latérale périphérique (24) réalisée sous forme de surface de dépouille, et une arête de coupe (26) étant réalisée au niveau d'une transition du côté supérieur (22) à la surface latérale périphérique (24),
l'insert de coupe (2) étant disposé sur le siège (14) de telle sorte que le côté supérieur (22) s'étende perpendiculairement à l'axe longitudinal (L) du corps d'outil (1),
**caractérisé en ce que**
l'arête de coupe (26) avec au moins deux coins de coupe utiles (28a, 28b, 28c) et des portions d'arête de coupe s'y raccordant des deux côtés, fait saillie dans la direction radiale par rapport à l'axe longitudinal (L) au-delà de la périphérie extérieure du côté frontal (13) du corps d'outil (1),
les au moins deux coins de coupe utiles (28a, 28b, 28c) présentant au moins un premier coin de coupe (28a) et un deuxième coin de coupe (28b) différent du premier coin de coupe.

2. Système d'outil selon la revendication 1, dans lequel le premier coin de coupe (28a) et le deuxième coin de coupe (28b) se distinguent l'un de l'autre par une ou plusieurs des caractéristiques suivantes un angle de coin (α1, α2), une réalisation du coin, un angle et/ou une largeur d'un biseau de renforcement s'étendant le long du coin de coupe, une structure en gradin de guidage de copeaux (22a) réalisée sur la surface d'enlèvement de copeaux, un matériau de l'insert de coupe et/ou un revêtement en matériau dur appliqué sur celui-ci dans la région des coins de coupe, une opération d'usinage pour laquelle le coin de coupe est réalisé.

3. Système d'outil selon la revendication 1 ou 2, dans lequel le côté inférieur (21) de l'insert de coupe (2) présente au moins un élément de fixation en rotation (25) qui coopère par engagement par correspondance de formes avec un élément de fixation en rotation complémentaire (15) au niveau du côté frontal (13) du corps d'outil (1).

4. Système d'outil selon l'une quelconque des revendications précédentes, dans lequel le côté inférieur (21) de l'insert de coupe (2) présente au moins un élément de centrage qui coopère par engagement par correspondance de formes avec le côté frontal (13) du corps d'outil, afin de positionner l'insert de coupe (2) par rapport à l'axe longitudinal (L) du corps d'outil (1).

5. Système d'outil selon l'une quelconque des revendications précédentes, dans lequel le côté inférieur (21) de l'insert de coupe (2) et le côté frontal (13) du corps d'outil (1) sont réalisés de telle sorte que l'insert de coupe (2) puisse être fixé seulement dans une orientation prédéfinie sur le corps d'outil (1).

6. Système d'outil selon l'une quelconque des revendications précédentes, dans lequel une forme de base du côté frontal (13) du corps d'outil (1) coïncide avec une forme de base de l'insert de coupe (2) .

7. Système d'outil selon l'une quelconque des revendications précédentes, dans lequel l'arête de coupe (26) est réalisée le long de toute la surface latérale périphérique (24) et fait saillie sur toute la périphérie dans la direction radiale au-delà de la périphérie extérieure du côté frontal (13) du corps d'outil (1).

8. Système d'outil selon l'une quelconque des revendications précédentes, dans lequel la surface latérale (24) présente sur toute la périphérie de l'insert de coupe (2) un angle de dépouille positif spécifique à l'insert de coupe.

9. Procédé pour l'usinage par tournage d'une pièce (W) avec un système d'outil (100), dans lequel un insert de coupe remplaçable (2) est disposé de manière solidaire en rotation sur un côté frontal (13) d'un corps d'outil (1) de telle sorte qu'un côté supérieur (22) réalisé sous forme de surface d'enlèvement de copeaux soit orienté perpendiculairement à un axe longitudinal (L) du corps d'outil (1), l'insert de coupe (2) présentant une arête de coupe (26) réalisée entre le côté supérieur (22) et une surface latérale périphérique (24), le procédé présentant les étapes suivantes :
- rotation de la pièce (W) autour d'un axe de pièce (Z),
- usinage par enlèvement de copeaux d'une surface de la pièce (W) avec l'un des coins de coupe (28a, 28b, 28c) de telle sorte que les copeaux produits roulent sur le côté supérieur (22) de l'insert de coupe (2),
- variation de la formation des copeaux par rotation commandée du corps d'outil (1) autour de son axe longitudinal (L) et mouvement de translation (T) du corps d'outil (1) coordonné avec celle-ci dans un plan qui s'étend perpendiculairement à l'axe longitudinal (L), avec une composante de déplacement en translation perpendiculaire à l'axe de la pièce (Z),
**caractérisé en ce que** l'arête de coupe (26) avec au moins deux coins de coupe utile (28a, 28b, 28c) et des portions d'arête de coupe s'y raccordant des deux côtés, fait saillie dans la direction radiale par rapport à l'axe longitudinal (L) au-delà de la périphérie extérieure du côté frontal (13) du corps d'outil (1).

10. Procédé selon la revendication 9, dans lequel l'axe longitudinal (L) du corps d'outil (1) est orienté dans le plan (XY) perpendiculairement à l'axe de la pièce (Z).

11. Procédé selon l'une quelconque des revendications 9 et 10, dans lequel les au moins deux coins de coupe utiles (28a, 28b, 28c) présentent un premier coin de coupe (28a) et un deuxième coin de coupe (28b) différent du premier coin de coupe (28a).

12. Procédé selon l'une quelconque des revendications 9 à 11, dans lequel la rotation commandée du corps d'outil (1) autour de son axe longitudinal (L) et le déplacement en translation (T) coordonné avec celle-ci s'effectuent de telle sorte qu'un angle d'inclinaison (κ1, κ2) d'une arête de coupe par enlèvement de copeaux active soit modifié.

13. Procédé selon l'une quelconque des revendications 9 à 12, dans lequel la rotation commandée du corps d'outil (1) et le déplacement en translation (T) coordonné avec celle-ci s'effectuent de telle sorte qu'un contour de la pièce reste inchangé lors de l'usinage par enlèvement de copeaux.

14. Procédé selon l'une quelconque des revendications 9 à 13, dans lequel le coin de coupe actif, lors de l'usinage par enlèvement de copeaux, est disposé dans un plan qui contient l'axe de la pièce (Z).

15. Utilisation d'un insert de coupe (2) qui présente un côté supérieur (22) réalisé sous forme de surface d'enlèvement de copeaux, un côté inférieur (21) réalisé sous forme de surface d'appui, une surface latérale périphérique (24) servant de surface de dépouille et une arête de coupe (26) réalisée entre le côté supérieur (22) et la surface latérale périphérique (24) avec au moins deux coins de coupe utiles d'enlèvement de copeaux (28a, 28b, 28c) et des portions d'arête de coupe s'y raccordant à chaque fois des deux côtés, dans un procédé d'usinage par tournage par enlèvement de copeaux selon l'une quelconque des revendications 9 à 14.

16. Utilisation selon la revendication 15, dans laquelle le côté inférieur (21) de l'insert de coupe (2) présente au moins un élément de fixation en rotation (25) qui coopère par engagement par correspondance de formes avec un élément de fixation en rotation complémentaire (15) au niveau du côté frontal (13) du corps d'outil (1).

17. Utilisation selon la revendication 15 ou 16, dans laquelle le côté inférieur (21) de l'insert de coupe (2) présente au moins un élément de centrage qui coopère par engagement par correspondance de formes avec le côté frontal (13) du corps d'outil (1), afin de positionner l'insert de coupe (2) par rapport à l'axe longitudinal (L) du corps d'outil (1).
